# EUROPÄISCHE PATENTSCHRIFT

(11) **EP 1 491 413 B1**
(45) Veröffentlichungstag und Bekanntmachung des Hinweises auf die Patenterteilung: **16.05.2007**
(21) Anmeldenummer: 04012993.4
(22) Anmeldetag: 02.06.2004
(51) Int. Cl.: B60R 21/26

(54) **Gasgenerator**
Gas generator
Générateur de gas

(30) Priorität: 27.06.2003 DE 20309949 U
(43) Veröffentlichungstag der Anmeldung: 29.12.2004
(73) Patentinhaber: TRW Airbag Systems GmbH, 84544 Aschau am Inn (DE)
(72) Erfinder: Fischer, Joachim, 84453 Mühldorf (DE); Gabler, Michael, 84453 Mühldorf (DE); Hofmann, Achim, 84570 Polling (DE)
(74) Vertreter: Kitzhofer, Thomas

(56) Entgegenhaltungen:
- DE-U1- 20 219 899
- US-A- 5 951 040
- US-B1- 6 315 322

## Beschreibung

Die Erfindung betrifft einen Gasgenerator.

Die Beeinflussung des zeitlichen Ausströmverhaltens des von einem Gasgenerator erzeugten Gases ist für Fahrzeuginsassen-Rückhaltesysteme von großer Bedeutung. Zum Beispiel ist es zum Befüllen eines Gassacks vorteilhaft, wenn die Gasmenge über die Zeit gesehen zumindest gleichmäßig abgegeben wird oder wenn zu Beginn ein geringerer und anschließend ein ansteigender Gasmassendurchfluß ermöglicht wird. Um das Ausströmverhalten zu optimieren, werden daher Mittel eingesetzt, die gezielt Ausströmöffnungen des Gasgenerators, durch die das Gas letztendlich zu seinem Bestimmungsort gelangen kann, während der Gaserzeugungsphase freigeben oder verschließen. Derartige Mittel müssen zuverlässig bei hohen Drücken und hohen Temperaturen arbeiten, sollten aber gleichzeitig möglichst kostengünstig und ohne großen Montageaufwand einzubauen sein.

Dokument US-A 5 951 040 offenbart (als näheliegendes Stand der Techik) einen Gasgenerator mit einer Ausströmkammer, die bei einer Aktivierung des Gasgenerators kurzzeitig unter Druck stehendes Gas enthält, wobei in einer Seitenwand der Ausströmkammer Ausströmöffnungen angeordnet sind. Die Ausströmöffnungen sind zunächst von einem Freigabeelement verschlossen, das Teil der Wand der Ausströmkammer ist und eine sich längs der Seitenwand der Ausströmkammer erstreckende Umfangswand und eine mit der Umfangswand verbundene Bodenwand hat. Aufgrund der Erhöhung des Innendrucks bei der Aktivierung des Gasgenerators verformt sich dessen Gehäuse plastisch, wobei sich das Freigabeelement relativ zum Rest der Wand der Ausströmkammer verschiebt und die Ausströmöffnungen wenigstens teilweise freigibt.

Hier wird ein Gasgenerator vorgestellt, bei dem eine Beeinflussung des Ausströmverhaltens des erzeugten Gases auf einfache Weise erreicht wird.

Der Gasgenerator hat eine Ausströmkammer, die bei einer Aktivierung des Gasgenerators zumindest kurzzeitig unter Druck stehendes Gas enthält, wobei in einer Seitenwand der Ausströmkammer wenigstens eine Ausströmöffnung angeordnet ist, und ein in der Ausströmkammer nicht verschieblich angeordnetes Freigabeelement mit einer sich längs der Seitenwand erstreckenden, vor der Aktivierung des Gasgenerators wenigstens eine Ausströmöffnung verschließenden Umfangswand und einer mit der Umfangswand verbundenen Bodenwand, wobei das Freigabeelement so ausgebildet ist, daß sich bei Überschreiten eines vorbestimmten Gasdrucks in der Ausströmkammer die Bodenwand unter abschnittsweiser plastischer Verformung der Umfangswand einstülpt und wenigstens eine bisher verdeckte Ausströmöffnung freigegeben wird. Die Freigabe der Ausströmöffnung erfolgt also nicht über eine Verschiebung einer Kappe oder die Zerstörung einer Membran, sondern wird durch die kontrollierte plastische Verformung und damit verbundene Formänderung des Freigabeelementes erreicht.

Bevorzugt verkürzt sich die Länge der Umfangswand des Freigabeelements längs der Seitenwand bei der plastischen Verformung des Freigabeelements, so daß sich die Umfangswand sozusagen von den Ausströmöffnungen zurückzieht. So bleiben keine Abschnitte oder Teile der Umfangswand im Bereich der gerade freigegebenen Ausströmöffnung zurück, die deren Querschnitt unkontrolliert beeinflussen könnten.

Die Bodenwand läßt sich einstückig mit der Umfangswand ausbilden, was Vorteile hinsichtlich der Fertigungskosten des Freigabeelements und des Verformungsverhaltens der Umfangswand bietet.

Bevorzugt ist das Freigabeelement einstückig ausgebildet.

In einer bevorzugten Ausführungsform der Erfindung ist bereits vor einer Aktivierung des Gasgenerators die Bodenwand zu einem gewissen Maß in die Umfangswand eingestülpt, und bei Überschreiten des vorbestimmten Gasdrucks vertieft sich die Einstülpung. Durch die Vorgabe einer Anfangseinstülpung wird ein exakter Anfangszustand definiert, über den sich das Freigabeverhalten der Ausströmöffnungen gut reproduzierbar einstellen läßt.

Es hat sich herausgestellt, daß besonders gute Werte erzielt werden, wenn die Bodenwand vor der Aktivierung des Gasgenerators unter einem Winkel von 180° in die Umfangswand übergeht. Die Anfangseinstülpung ist bevorzugt so gewählt, daß am Rand der Bodenwand Abschnitte der Bodenwand und der Umfangswand direkt aneinander anliegen. Am Übergang zwischen Bodenwand und Umfangswand ist bei einer solchen Ausführung ein starker Knick gebildet, der eine Schwächungszone vorgibt, entlang derer die plastische Verformung der Umfangswand bei Überschreiten des vorbestimmten Gasdrucks beginnt. Hierbei ist bevorzugt der Biegeradius an der Übergangsstelle zwischen Umfangswand und Bodenwand der kleinste Biegeradius, der am gesamten Freigabeelement auftritt.

Die Umfangswand kann rohrförmig oder ringförmig sein, es ist aber nicht unbedingt notwendig, daß sie als geschlossene Wand ausgebildet ist. Auch eine z.B. geschlitzte Umfangswand wäre einsetzbar.

Um die Ausströmöffnungen vor ihrer Freigabe abzudichten, kann die Umfangswand unter Spannung an einer Innenseite der Seitenwand der Ausströmkammer anliegen.

In einer bevorzugten Ausführungsform der Erfindung sind mehrere in Axialrichtung der Ausströmkammer hintereinander angeordnete Ausströmöffnungen vorgesehen, die durch die plastische Verformung des Freigabeelements sukzessive freigegeben werden. Es kann sich hierbei jeweils um eine einzelne Ausströmöffnung oder aber eine Gruppe von Ausströmöffnungen handeln, die in etwa auf gleicher axialer Höhe angeordnet sind. Die Anzahl der freigegebenen Ausströmöffnungen hängt dabei unter anderem vom erreichten Innendruck in der Ausströmkammer ab.

Es müssen vor der Aktivierung des Gasgenerators nicht alle Ausströmöffnungen der Ausströmkammer von der Umfangswand verschlossen sein. Dann kann bereits vor Überschreiten des vorbestimmten Gasdrucks in der Ausströmkammer ein Teil des Gases aus der Ausströmkammer abströmen.

Die Erfindung läßt sich sowohl in Gasgeneratoren umsetzen, die als rein pyrotechnische Gasgeneratoren ausgelegt sind, als auch in Hybridgasgeneratoren, die einen pyrotechnischen Treibsatz und ein Druckgas enthalten. Ferner ist auch der Einsatz bei reinen Kaltgasgeneratoren denkbar, die ohne pyrotechnische Heizladung auskommen und bei denen eine Membrane oder dergleichen vorzugsweise von außen geöffnet wird.

Weitere Merkmale und Vorteile der Erfindung ergeben sich aus der nachfolgenden Beschreibung eines Ausführungsbeispiels, in Verbindung mit den beigefügten Zeichnungen. In diesen zeigen:
- Figur 1 einen schematischen Teilschnitt eines erfindungsgemäßen Gasgenerators;
- Figur 2 einen vergrößerten Ausschnitt aus Figur 1;
- Figuren 3a bis 3c einen schematischen Schnitt durch die Ausströmkammer eines erfindungsgemäßen Gasgenerators zu drei verschiedenen Zeitpunkten;
- Figur 4 eine schematische Teilansicht eines Freigabeelements eines erfindungsgemäßen Gasgenerators; und
- Figur 5 eine schematisch perspektivische Schnittansicht eines Teils eines erfindungsgemäßen Gasgenerators.

Der im beschriebenen Ausführungsbeispiel vorgestellte Gasgenerator 10 ist ein im Prinzip bekannter Hybridgasgenerator, bei dem das erzeugte Gas hauptsächlich aus einem als Druckbehälter 12 ausgebildeten, mit Druckgas gefüllten Reservoir stammt. Zusätzlich ist ein (nicht dargestellter) pyrotechnischer Treibsatz zur Erwärmung und eventuell zur Zündung des Gases vorgesehen.

An ein Ende des Druckbehälters 12 grenzt eine Ausströmkammer 14 an, die gegenüber dem Druckbehälter 12 durch eine Membran 16 verschlossen ist, die erst bei einer Aktivierung des Gasgenerators 10 zerstört wird, so daß das Druckgas aus dem Druckbehälter 12 in die Ausströmkammer 14 gelangen kann.

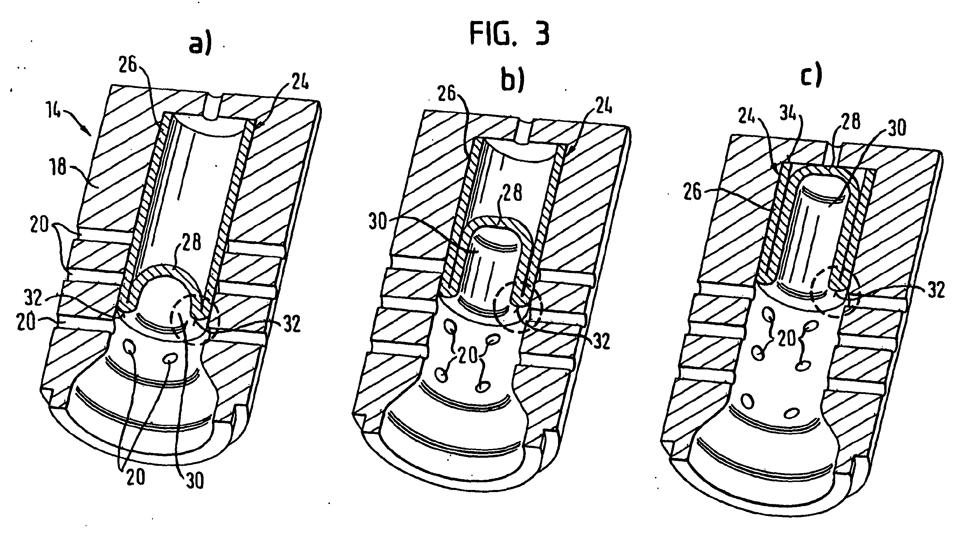

In einer Seitenwand 18 der Ausströmkammer 14 sind mehrere Ausströmöffnungen 20 angeordnet, durch die das Gas über eine Diffusorkammer 22 zu seinem letztendlichen Bestimmungsort, z.B. einem Gassack strömen kann. Wie in den Figuren 3a bis 3c zu sehen ist, sind die Ausströmöffnungen 20 in mehreren, bezogen auf die Längsachse A der Ausströmkammer 14 auf unterschiedlichen Höhen liegenden Gruppen angeordnet.

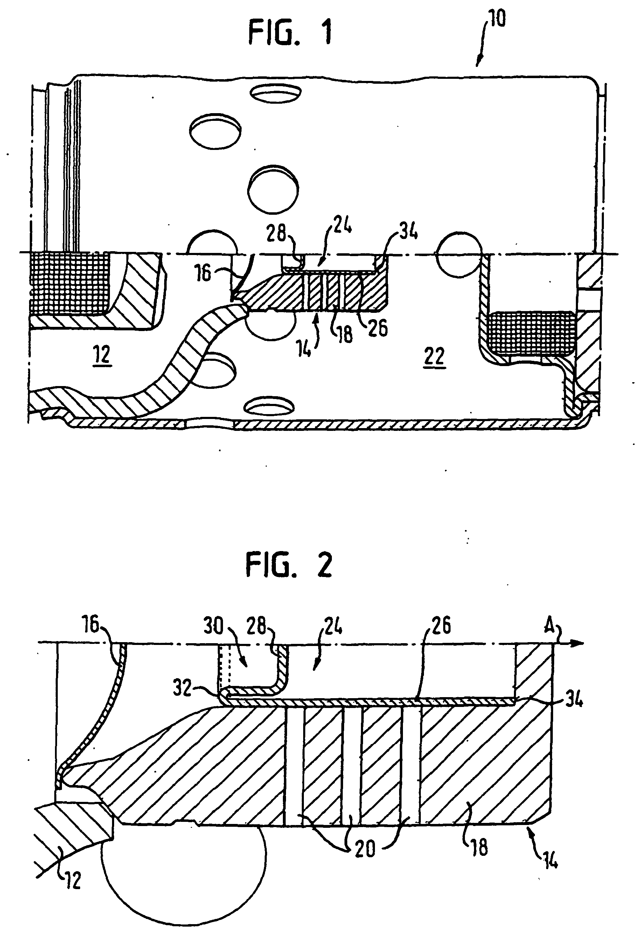

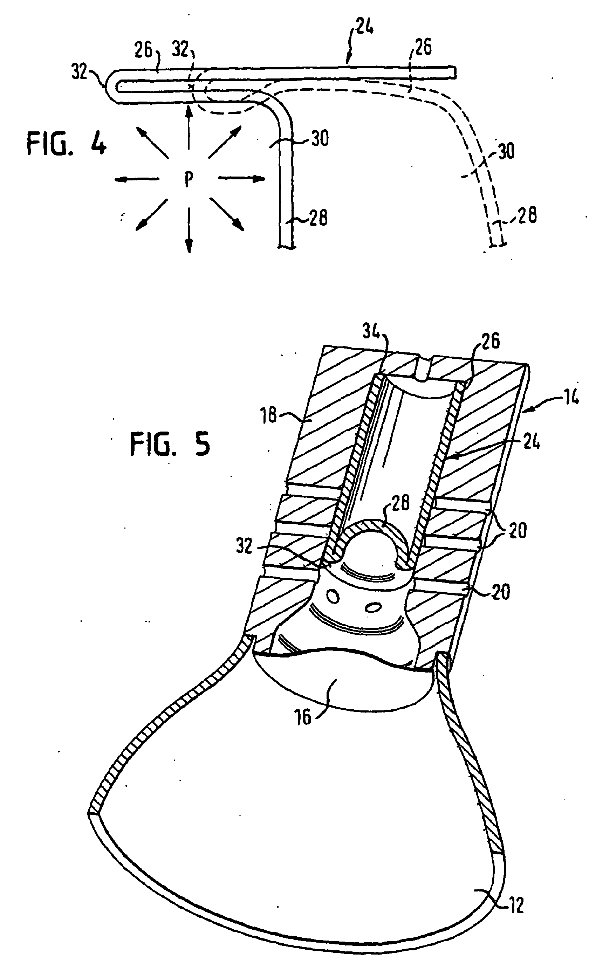

In der Ausströmkammer 14 befindet sich ein Freigabeelement 24, das vergrößert in Figur 4 dargestellt ist. Das Freigabeelement 24 ist eine einseitig geschlossene Buchse und besteht hier aus einem Metallblech und hat eine Umfangswand 26 und eine einstückig mit der Umfangswand 26 verbundene Bodenwand 28. Im Zustand vor der Aktivierung des Gasgenerators, wie er in den Figuren 1, 2, 3a, 4 (durchgezogene Linie) und 5 gezeigt ist, verschließt die Umfangswand 26 jeweils eine oder mehrere der axial hintereinander angeordneten Gruppen von Ausströmöffnungen 20. Die Umfangswand 26 liegt unter Vorspannung an der Innenseite der Seitenwand 18 an, so daß die verdeckten Ausströmöffnungen 20 gasdicht verschlossen sind.

Der Rand 34 des Freigabeelements 24 an seinem axial offenen Ende liegt an der dem Druckbehälter 12 abgewandten Wand der Ausströmkammer 14 an, so daß sich das Freigabeelement 24 nicht in Axialrichtung A verschieben kann. Eine Bewegung entgegen der Axialrichtung A ist durch die Vorspannung des Freigabeelements 24 gegen die Seitenwand 18 verhindert.

Die Bodenwand 28 ist bereits vor der Aktivierung des Gasgenerators 10 durch eine Verformung des Freigabeelements 24 ein Stück weit in die Umfangswand 26 eingestülpt. Die Bodenwand 28 ist in den inneren Hohlraum der Buchse hineingefaltet, wodurch eine Einstülpung 30 mit einer vorbestimmten Tiefe ausgebildet ist. Am Rand der Einstülpung 30 geht die Umfangswand 26 unter einem Winkel von 180° in die Bodenwand 28 über. In diesem Übergangsbereich liegen in diesem Beispiel Abschnitte der Bodenwand 28 und der Umfangswand 26 aneinander an. Hierdurch ist ein ausgeprägter Knick gebildet, der zugleich einen unteren Rand 32 des Freigabeelements 24 darstellt.

Bei der Aktivierung des Gasgenerators 10 erhöht sich schlagartig der Innendruck p in der Ausströmkammer 14, wodurch eine Kraft auf die Bodenwand 28 in Axialrichtung A der Ausströmkammer 14, d.h. vom Druckbehälter 12 weggerichtet, erzeugt wird. Überschreitet der Innendruck p einen vorbestimmten Wert, bewegt sich die Bodenwand 28 unter Vertiefung der Einstülpung 30 in Axialrichtung A. Hierbei verformt sich die Umfangswand 26 ausgehend vom unteren Rand 32 plastisch, wodurch sich ihre axiale Länge verkürzt. Dies ist gut zu sehen in den Figuren 3a bis c und 4 (gestrichelte Linie). Die Stelle der plastischen Verformung ist in den Figuren 3a bis c jeweils mit einem Kreis markiert. Die Umfangswand 26 wird also parallel zur Seitenwand 18 mit den Ausströmöffnungen 20 plastisch verformt und nicht in Längsrichtung der Ausströmöffnungen 20 wie bei einer herkömmlichen Membrane.

Durch dieses "Aufrollen" der Umfangswand 26 des Freigabeelements 24 werden sukzessive die axial übereinander gelegenen Gruppen von Ausströmöffnungen 20 freigegeben. Die Einstülpung 30 vertieft sich so weit, bis die Bodenwand 28 am axial oberen Ende, d.h. dem vom Druckbehälter 12 entfernten Ende der Ausströmkammer 14 anliegt (siehe Figur 3c). Eine plastische Verformung findet jeweils nur an der Bodenwand 28 und im Bereich des oberen Randes 32 statt. Der Rest der Umfangswand 26 verformt sich dagegen nicht. Es kommt nicht zu einer Verschiebung des gesamten Freigabeelement 24 relativ zur Ausströmkammer 14. Der Rand 34 des Freigabeelements 24 behält über den gesamten Verformungsprozeß seine Position an der Wand der Ausströmkammer 14 bei.

Alternativ ist das Freigabeelement 24 im Ausgangszustand nicht eingestülpt (siehe unterbrochene Linien in Figur 2) und wird erst bei Druckaufbau eingestülpt.

Der Zeitpunkt der Freigabe der jeweiligen Ausströmöffnungen 20 ist u.a. abhängig von der Druckanstiegsrate, der Geometrie des Freigabeelements 24, des für das Freigabeelement 24 verwendeten Materials sowie dessen Wandstärken und der Größe und Anzahl der Ausströmöffnungen 20. Diese Parameter müssen vom Fachmann so aufeinander abgestellt werden, daß das gewünschte Ausströmverhalten erreicht wird.

Bei der hier vorgestellten Verwendung eines beschriebenen Freigabeelements 24 in einem Hybridgasgenerator ergibt sich der Vorteil, daß der Druckabfall gegenüber der Fall, daß von Beginn an sämtliche Ausströmöffnungen geöffnet sind, verzögert werden kann. Es wird also sowohl ein anfänglich sehr großer Massenstrom verhindert, der sich z.B. negativ auf das Entfaltungsverhalten eines Gassacks auswirkt, als auch ein zu kleiner Massenstrom während der restlichen Ausströmzeit, der sich ebenfalls negativ auf das Entfaltungsverhalten eines Gassacks auswirken würde. Durch die sukzessive Freigabe der Ausströmöffnungen 20 in Abhängigkeit vom Innendruck p kann so die Füllzeit des Gassacks optimiert werden.

Das beschriebene Freigabeelement kann auch in einem rein pyrotechnischen Gasgenerator eingesetzt werden. In diesem Fall wirkt sich die Verwendung des Freigabeelements positiv auf das Temperaturverhalten des Gasgenerators aus. Das Freigabeelement kann so ausgelegt sein, daß z.B. bei -35°C der Brennkammerdruck nicht ausreicht, um eine plastische Verformung des Materials am unteren Rand hervorzurufen. In diesem Fall werden nur die bereits freiliegenden Ausströmöffnungen Gas austreten lassen, so daß der Innendruck im Gasgenerator nicht zu stark abfällt. Bei höheren Temperaturen, z.B. am oberen Rand des Temperaturbandes bei etwa 85°C, hat das Material des Freigabeelements an Festigkeit verloren, so daß eine starke Vertiefung der Einstülpung 30 erfolgen wird und sämtliche Ausströmöffnungen 20 freigegeben werden. Die größere Menge an erzeugtem Gas, die bei hohen Temperaturen entsteht, kann hierdurch optimal aus dem Gasgenerator ausströmen.

In jedem Fall wird das Freigabeelement weder zerstört noch zerfällt es in Einzelteile.

## Patentansprüche

1. Gasgenerator mit
einer Ausströmkammer (14), die bei einer Aktivierung des Gasgenerators (10) zumindest kurzzeitig unter Druck stehendes Gas enthält,
wobei in einer Seitenwand (18) der Ausströmkammer (14) wenigstens eine Ausströmöffnung (20) angeordnet ist, und
mit einem in der Ausströmkammer (14) nicht verschieblich angeordneten Freigabeelement (24) mit einer sich längs der Seitenwand (18) erstreckenden, vor einer Aktivierung des Gasgenerators (10) wenigstens eine Ausströmöffnung (20) verschließenden Umfangswand (26) und einer mit der Umfangswand (26) verbundenen Bodenwand (28),
wobei das Freigabeelement (24) so ausgebildet ist, daß sich bei Überschreiten eines vorbestimmten Gasdrucks (p) in der Ausströmkammer (14) die Bodenwand (28) unter abschnittsweiser plastischer Verformung der Umfangswand (26) einstülpt und wenigstens eine bisher verdeckte Ausströmöffnung (20) freigegeben wird.

2. Gasgenerator nach Anspruch 1, **dadurch gekennzeichnet, daß** sich bei der plastischen Verformung des Freigabeelements (24) die Länge der Umfangswand (26) längs der Seitenwand (18) verkürzt.

3. Gasgenerator nach einem der vorhergehenden Ansprüche, **dadurch gekennzeichnet, daß** die Bodenwand (28) einstückig mit der Umfangswand (26) ausgebildet ist.

4. Gasgenerator nach einem der vorhergehenden Ansprüche, **dadurch gekennzeichnet, daß** das Freigabeelement (24) einstückig ausgebildet ist.

5. Gasgenerator nach einem der vorhergehenden Ansprüche, **dadurch gekennzeichnet, daß** bereits vor einer Aktivierung des Gasgenerators (10) die Bodenwand (28) in die Umfangswand (26) eingestülpt ist und sich bei Überschreiten des vorbestimmten Gasdrucks (p) die Einstülpung (30) vertieft.

6. Gasgenerator nach einem der vorhergehenden Ansprüche, **dadurch gekennzeichnet, daß** die Bodenwand (28) vor der Aktivierung des Gasgenerators (10) unter einem Winkel von 180° in die Umfangswand (26) übergeht.

7. Gasgenerator nach einem der vorhergehenden Ansprüche, **dadurch gekennzeichnet, daß** die Umfangswand (26) rohrförmig ist.

8. Gasgenerator nach einem der vorhergehenden Ansprüche, **dadurch gekennzeichnet, daß** die Umfangswand (26) geschlossen ringförmig ist.

9. Gasgenerator nach einem der vorhergehenden Ansprüche, **dadurch gekennzeichnet, daß** die Umfangswand (26) unter Spannung an einer Innenseite der Seitenwand (18) der Ausströmkammer (14) anliegt.

10. Gasgenerator nach einem der vorhergehenden Ansprüche, **dadurch gekennzeichnet, daß** mehrere in Axialrichtung (A) der Ausströmkammer (14) hintereinander angeordnete Ausströmöffnungen (20) vorgesehen sind, die durch die plastische Verformung des Freigabeelements (24) sukzessive freigegeben werden.

11. Gasgenerator nach einem der vorhergehenden Ansprüche, **dadurch gekennzeichnet, daß** vor der Aktivierung des Gasgenerators (10) wenigstens eine Ausströmöffnung (20) der Ausströmkammer (14) nicht von der Umfangswand (26) verschlossen ist.

12. Gasgenerator nach einem der vorhergehenden Ansprüche, **dadurch gekennzeichnet, daß** der Gasgenerator (10) einen pyrotechnischen Treibsatz und Druckgas enthält.

13. Gasgenerator nach einem der Ansprüche 1 bis 10, **dadurch gekennzeichnet, daß** der Gasgenerator ein rein pyrotechnischer Gasgenerator ist.

## Claims

1. A gas generator comprising
an outflow chamber (14) which upon an activation of the gas generator (10) contains at least briefly gas under pressure,
at least one outflow opening (20) being arranged in a side wall (18) of the outflow chamber (14), and
further comprising a release element (24) which is arranged non-displaceably in the outflow chamber (14) and has a peripheral wall (26) extending along the side wall (18) and closing at least one outflow opening (20) before an activation of the gas generator (10), and a base wall (28) connected with the peripheral wall (26),
the release element (24) being configured such that when a predetermined gas pressure (p) in the outflow chamber (14) is exceeded, the base wall (28) turns in while the peripheral wall (26) is partially plastically deformed, and at least one hitherto concealed outflow opening (20) is exposed.

2. The gas generator according to Claim 1, **characterized in that** with the plastic deformation of the release element (24), the length of the peripheral wall (26) is shortened along the side wall (18).

3. The gas generator according to any of the preceding claims, **characterized in that** the base wall (28) is constructed in one piece with the peripheral wall (26).

4. The gas generator according to any of the preceding claims, **characterized in that** the release element (24) is constructed in one piece.

5. The gas generator according to any of the preceding claims, **characterized in that** the base wall (28) is turned into the peripheral wall (26) already before an activation of the gas generator (10), and the turned-in portion (30) deepens when the predetermined gas pressure (p) is exceeded.

6. The gas generator according to any of the preceding claims, **characterized in that** before the activation of the gas generator (10), the base wall (28) continues into the peripheral wall (26) at an angle of 180 degrees.

7. The gas generator according to any of the preceding claims, **characterized in that** the peripheral wall (26) is tubular.

8. The gas generator according to any of the preceding claims, **characterized in that** the peripheral wall (26) has a closed ring shape.

9. The gas generator according to any of the preceding claims, **characterized in that** the peripheral wall (26) lies under tension against an inner surface of the side wall (18) of the outflow chamber (14).

10. The gas generator according to any of the preceding claims, **characterized in that** a plurality of outflow openings (20) is provided, which are arranged one behind the other in the axial direction (A) of the outflow chamber (14) and are exposed successively by the release element (24) being plastically deformed.

11. The gas generator according to any of the preceding claims, **characterized in that** before the activation of the gas generator (10) at least one outflow opening (20) of the outflow chamber (14) is not closed by the peripheral wall (26).

12. The gas generator according to any of the preceding claims, **characterized in that** the gas generator (10) contains a pyrotechnic propellant charge and compressed gas.

13. The gas generator according to any of Claims 1 to 10, **characterized in that** the gas generator is a purely pyrotechnic gas generator.

## Revendications

1. Générateur de gaz comportant
une chambre d'échappement (14) qui, lors d'une activation du générateur de gaz (10), contient du gaz sous pression au moins momentanément ,
au moins un orifice d'échappement (20) étant agencé dans une paroi latérale (18) de la chambre d'échappement (14), et
comportant un élément de dégagement (24) qui est agencé de manière non déplaçable dans la chambre d'échappement (14) et qui a une paroi périphérique (26) s'étendant le long de la paroi latérale (18) et fermant au moins un orifice d'échappement (20) avant une activation du générateur de gaz (10), et une paroi de fond (28) reliée à la paroi périphérique (26),
l'élément de dégagement (24) étant réalisé de telle sorte que lorsqu'une pression de gaz (p) prédéterminée dans la chambre d'échappement (14) est dépassée, la paroi de fond (27) se retourne en déformant plastiquement par tronçons la paroi périphérique (26), et au moins un orifice d'échappement (20) jusqu'à présent recouvert est dégagé.

2. Générateur de gaz selon la revendication 1, **caractérisé en ce que** lors de la déformation plastique de l'élément de dégagement (24), la longueur de la paroi périphérique (26) se raccourcit le long de la paroi latérale (18).

3. Générateur de gaz selon l'une des revendications précédentes, **caractérisé en ce que** la paroi de fond (28) est réalisée d'un seul tenant avec la paroi périphérique (26).

4. Générateur de gaz selon l'une des revendications précédentes, **caractérisé en ce que** l'élément de dégagement (24) est réalisé d'un seul tenant.

5. Générateur de gaz selon l'une des revendications précédentes, **caractérisé en ce que** déjà avant une activation du générateur de gaz (10), la paroi de fond (28) est retournée dans la paroi périphérique (26) et lorsqu'une pression de gaz (p) prédéterminée est dépassée, la partie retournée (30) s'approfondit.

6. Générateur de gaz selon l'une des revendications précédentes, **caractérisé en ce qu'**avant l'activation du générateur de gaz (10), la paroi de fond (28) se transforme en la paroi périphérique (26) sous un angle de 180°.

7. Générateur de gaz selon l'une des revendications précédentes, **caractérisé en ce que** la paroi périphérique (26) est de forme tubulaire.

8. Générateur de gaz selon l'une des revendications précédentes, **caractérisé en ce que** la paroi périphérique (26) est de forme annulaire fermée.

9. Générateur de gaz selon l'une des revendications précédentes, **caractérisé en ce que** la paroi périphérique (26) est en appui sous précontrainte sur une face intérieure de la paroi latérale (18) de la chambre d'échappement (14).

10. Générateur de gaz selon l'une des revendications précédentes, **caractérisé en ce qu'**il est prévu plusieurs orifices d'échappement (20) agencés les uns derrière les autres en direction axiale (A) de la chambre d'échappement (14), lesquels sont successivement dégagés par la déformation plastique de l'élément de dégagement (24).

11. Générateur de gaz selon l'une des revendications précédentes, **caractérisé en ce qu'**avant l'activation du générateur de gaz (10), au moins un orifice d'échappement (20) de la chambre d'échappement (14) n'est pas fermé par la paroi périphérique (26).

12. Générateur de gaz selon l'une des revendications précédentes, **caractérisé en ce que** le générateur de gaz (10) contient une charge propulsive pyrotechnique et du gaz sous pression.

13. Générateur de gaz selon l'une des revendications 1 à 10, **caractérisé en ce que** le générateur de gaz est un générateur de gaz purement pyrotechnique.
